# EUROPÄISCHE PATENTSCHRIFT

(11) **EP 2 792 000 B1**
(45) Veröffentlichungstag und Bekanntmachung des Hinweises auf die Patenterteilung: **30.08.2017**
(21) Anmeldenummer: 12784284.7
(22) Anmeldetag: 15.11.2012
(51) Int. Cl.: H01M 2/36, H01M 2/38, H01M 10/42, H01M 10/0565, H01M 10/052

(54) **ELEKTROLYTFLÜSSIGKEITSDOSIEREINRICHTUNG FÜR LITHIUM-ZELLEN**
ELECTROLYTE FLUID METERING DEVICE FOR LITHIUM CELLS
DISPOSITIF DE DOSAGE DE LIQUIDE ÉLECTROLYTIQUE POUR DES ÉLÉMENTS AU LITHIUM

(30) Priorität: 15.12.2011 DE 102011088682
(43) Veröffentlichungstag der Anmeldung: 22.10.2014
(73) Patentinhaber: Robert Bosch GmbH, 70442 Stuttgart (DE)
(72) Erfinder: WEGNER, Marcus, 71229 Leonberg (DE); MUELLER, Matthias, 71549 Auenwald (DE); TENZER, Martin, 72669 Unterensingen (DE)
(86) Internationale Anmeldenummer: PCT/EP2012/072695
(87) Internationale Veröffentlichungsnummer: WO 2013/087341

(56) Entgegenhaltungen:
- EP-A2- 1 804 316
- DE-A1-102007 023 896
- DE-A1-102009 041 070
- DE-A1-102009 047 057
- DE-A1-102010 048 320
- JP-A- 2003 036 892
- JP-A- 2003 086 173
- US-A1- 2003 008 201
- US-A1- 2007 074 489

## Beschreibung

Die vorliegende Erfindung betrifft ein Batteriesystem, eine Elektrolytflüssigkeitsdosiereinrichtung, ein Verfahren sowie ein mobiles oder stationäres System.

### Stand der Technik

Bei herkömmlichen Lithium-(Ionen-)Batterien wird eine Mischung aus organischen Lösungsmitteln und anorganischen Leitsalzen als Elektrolytflüssigkeit verwendet.

Eine Weiterentwicklung hiervon sind Lithium-(Ionen-)Batterien, welche feste Polymerelektrolyten aufweisen.

Auch sind Kombinationen dieser beiden Elektrolytkonzepte bekannt, welche gelartige Elektrolyte aufweisen, die aus einem mit einer Elektrolytflüssigkeit getränkten Polymer bestehen.

In der DE 10207023896 A1 ist ein elektrochemischer Energiespeicher offenbart mit mindestens einer Zelle und mit mindestens zwei Vorratsbehältern zur Aufnahme eines Elektrolyten. Desweiteren ist ein Verfahren offenbart, wobei abhängig vom Betriebszustand des elektrochemischen Energiespeichers mindestens ein Bestandteil des Elektrolyten aus der Zelle entfernt, zugegeben oder ausgetauscht wird.

In der JP 2003 086173 A ist ein Kontroll-System für eine Flüssigkeitsinjektions-Einrichtung und ein Verfahren zur Injektion einer Elektrolytflüssigkeit in eine Polymerbatterie offenbart. Hierbei wird der Polymerbatterie Elektrolytflüssigkeit aus einem Vorratsbehälter zugeführt.

Die JP 2003 036892 A offenbart eine Batteriekontrolleinheit mit einem Vorratstank für eine Elektrolytlösung, welche an eine Sekundärbatterie angefügt ist. Die Batteriekontrolleinheit misst die Zusammensetzung der Elektrolytlösung und veranlasst gegebenenfalls ein Nachfüllen der Elektrolytlösung wenn die Zusammensetzung dieser außerhalb eines vorgegebenen Wertes liegt.

### Offenbarung der Erfindung

Die Erfindung wird durch den Gegenstand der unabhängigen Ansprüche 1, 8, 10 und 11 definert. Gegenstand der vorliegenden Erfindung ist ein Batteriesystem, umfassend mindestens eine Lithium-Zelle mit einem Elektrolyten, insbesondere einem so genannten gelartigen Elektrolyten beziehungsweise Gel-(Polymer-) Elektrolyten, welcher mindestens ein, mit einer Elektrolytflüssigkeit getränktes oder tränkbares Polymer, insbesondere einen so genannten Polymerelektrolyten, umfasst, und mindestens eine Elektrolytflüssigkeitsdosiereinrichtung, wobei mindestens eine Komponente der Elektrolytflüssigkeit durch die Elektrolyt- flüssigkeitsdosiereinrichtung der Lithium-Zelle zuführbar und/oder aus der Lithium-Zelle abführbar ist. Die Elektrolytflüssigkeitsdosiereinrichtung weist mindestens einen Elektrolytflüssigkeitskomponentenvorratsbehälter auf, dessen Volumen durch eine bewegliche Wand veränderbar ist. Desweiteren umfasst das Batteriesystem eine Steuereinrichtung, welche einen entsprechenden Hub der beweglichen Wand der Elektrolytflüssigkeitsdosiereinrichtung in Abhängigkeit von mindestens einem Messparameter, ausgewählt aus der Gruppe umfassend Zellspannung, Zellstrom, Zellinnenwiderstand und Kombinationen davon, steuert.

Unter einer Lithium-Zelle kann insbesondere eine galvanische Zelle verstanden werden, welche Lithium als elektrochemisch aktive Zellkomponente umfasst. Unter einer Lithium-Zelle kann sowohl eine Lithium-Zelle, welche als Anodenmaterial metallisches Lithium oder eine Lithiumlegierung, als auch eine so genannte LithiumIonen-Zelle verstanden werden, welche als Anodenmaterial ein Interkalationsmaterial, beispielsweise Graphit, umfasst, in welches Lithiumionen reversibel ein- und wieder ausgelagert werden können, was auch als Interkalation beziehungsweise Deinterkalation bezeichnet wird.

Unter den Komponenten einer Elektrolytflüssigkeit können insbesondere Elektrolytlösungsmittel, Leitsalze sowie Mischungen, insbesondere Lösungen, davon verstanden werden. Beispielsweise kann eine Elektrolytflüssigkeit ein oder mehrere, insbesondere organische, Elektrolytlösungsmittel, beispielsweise ausgewählt aus der Gruppe der Carbonate und Ether, und ein oder mehrere Leitsalze, beispielsweise LiPF₆, umfassen.

Die Elektrolytflüssigkeitsdosiereinrichtung kann dabei sowohl zur Dosierung der (gesamten) Elektrolytflüssigkeit, also einer Mischung aus einem oder mehreren Elektrolytlösungsmitteln und einem oder mehreren Leitsalzen, als auch zur (separaten) Dosierung von einem oder mehreren Elektrolytlösungsmittel/n und/oder von einem oder mehreren Leitsalz/en ausgelegt sein.

Die Elektrolytflüssigkeitsdosiereinrichtung ermöglicht es vorteilhafterweise der Lithium-Zelle zusätzliche Elektrolytkomponenten, beispielsweise in Form von Elektrolytflüssigkeit oder Elektrolytlösungsmittel und/oder Leitsalz, zuzuführen beziehungsweise Elektrolytkomponenten, beispielsweise in Form von Elektrolytflüssigkeit, aus der Lithium-Zelle zu entfernen und damit die Elektrolytflüssigkeit im Polymer jederzeit so zu bemessen beziehungsweise einzustellen, dass die Lithium-Zelle für die jeweilige Anwendung und den aktuellen Betriebszustand optimal eingestellt werden kann. So kann wiederum vorteilhafterweise ein hohes Leistungsvermögen bei unterschiedlichsten Anwendungen erzielt werden. Zudem kann so eine hohe Sicherheit gewährleistet werden. Dadurch, dass die Elektrolytflüssigkeit, beispielsweise die Elektrolytflüssigkeitsmenge, stets auf die aktuellen Anforderungen angepasst beziehungsweise reduziert werden kann, können zu- dem auch parasitäre Nebenreaktionen, welche ansonsten gegebenenfalls die Elektrolytflüssigkeit aufzehren und die Lithium-Zelle sogar langfristig zerstören könnten, deutlich reduziert werden und damit die Lebensdauer der Lithium-Zelle deutlich verlängert werden. Weiterhin kann vorteilhafterweise eine alterungsbedingte und gegebenenfalls temperaturbedingte Degeneration der Elektrolytflüssigkeit in der Lithium-Zelle kompensiert werden, beispielsweise indem durch die Elektrolytflüssigkeitsdosiereinrichtung Elektrolytflüssigkeit nachdosiert wird, und so die Auswirkungen von Alterung deutlich reduziert und damit ebenfalls die Lebensdauer signifikant verlängert werden.

Die Elektrolytflüssigkeit wirkt sich vorteilhaft auf die Ionenleitfähigkeit des Elektrolyten aus. Der polymere Anteil des Elektrolyten kann vorteilhafterweise eine hohe Temperaturbeständigkeit aufweisen.

Die Elektrolytflüssigkeitsdosiereinrichtung weist mindestens einen Elektrolytflüssigkeitskomponentenvorratsbehälter auf, dessen Volumen durch eine bewegliche Wand veränderbar ist. Bei der beweglichen Wand kann es sich beispielsweise ähnlich wie bei einer Spritze, um eine bewegliche, insbesondere verschiebbare Wand, aus einem relativ starren Material handeln. Es ist jedoch ebenso möglich, die bewegliche Wand aus einem elastischen Material auszubilden und die Volumenänderung durch eine Änderung der Dehnung des elastischen Materials herbeizuführen. Zum Beispiel kann die Elektrolytflüssigkeitsdosiereinrichtung auch zwei oder mehr, insbesondere derartige, Elektrolytflüssigkeitskomponentenvorratsbehälter aufweisen, von denen beispielsweise ein Elektrolytflüssigkeitskomponentenvorratsbehälter zur Bevorratung von Elektrolytflüssigkeit und/oder ein Elektrolytflüssigkeitskomponentenvorratsbehälter zur Bevorratung von Elektrolytlösungsmittel und/oder ein Elektrolytflüssigkeitskomponentenvorratsbehälter zur Bevorratung von Leitsalz ausgelegt sein kann.

Das Batteriesystem umfasst eine Steuereinrichtung. Die Steuereinrichtung ist dazu ausgelegt die Elektrolytflüssigkeitsdosiereinrichtung in Abhängigkeit von mindestens einem Messparameter, ausgewählt aus der Gruppe umfassend Zellspannung, Zellstrom, Zellinnenwiderstand und Kombinationen davon, zu steuern beziehungsweise zu regeln.

Dabei kann die Steuereinrichtung in die Elektrolytflüssigkeitsdosiereinrichtung integriert sein beziehungsweise ein Bauteil der Elektrolytflüssigkeitsdosiereinrichtung sein. Es ist jedoch ebenso möglich, dass es sich bei der Steuereinrichtung um eine auch für weitere Zwecke eingesetzte Steuereinrichtung des Batteriesys- tems, beispielsweise eines Batteriemanagementsystem, handelt.

Um Messparameter von einer oder mehreren Messeinrichtungen zu empfangen, kann die Steuereinrichtung mindestens eine Schnittstelle zum signaltechnischen Anschließen einer Messeinrichtung aufweisen. Beispielsweise kann die Steuereinrichtung eine Schnittstelle zum signaltechnischen Anschließen einer (Zell-) Spannungsmesseinrichtung und/oder eine Schnittstelle zum signaltechnischen Anschließen einer (Zell-)Strommesseinrichtung und/oder eine Schnittstelle zum signaltechnischen Anschließen eine (Zellinnen-)Widerstandsmesseinrichtung und/oder eine Schnittstelle zum signaltechnischen Anschließen einer (Zellinnen)Temperaturmesseinrichtung aufweisen.

Im Rahmen einer Ausführungsform ist die Menge der mindestens einen Elektrolytflüssigkeitskomponente, insbesondere der Elektrolytflüssigkeit, in der Lithium-Zelle durch die Elektrolytflüssigkeitsdosiereinrichtung, insbesondere automatisch, regulierbar. Beispielsweise kann dabei die Elektrolytlösungsmittelmenge und/oder die Leitsalzmenge und/oder die Elektrolytlösungsmittelmenge in der Lithium-Zelle durch die Elektrolytflüssigkeitsdosiereinrichtung, insbesondere automatisch, regulierbar sein.

Im Rahmen einer weiteren Ausführungsform umfasst die Lithium-Zelle eine Anode, eine Kathode und einen dazwischen angeordneten Separator. Dabei ist es möglich, dass der Separator den Elektrolyten umfasst oder daraus ausgebildet ist. Im Bereich des Separators, insbesondere an einer oder mehren Stellen am Rand des Separators, können insbesondere eine oder mehrer Schnittstelle/n zur Zuführung und/oder Abführung der mindestens einen Elektrolytflüssigkeitskomponente, beispielsweise von Elektrolytflüssigkeit, insbesondere durch beziehungsweise aus/in die Elektrolytflüssigkeitsdosiereinrichtung, ausgebildet sein.

Die Elektrolytflüssigkeitsdosiereinrichtung kann insbesondere durch eine oder mehrere Flüssigkeitsleitung/en mit der Lithium-Zelle verbunden oder verbindbar sein.

Im Rahmen einer weiteren Ausführungsform weist die Elektrolytflüssigkeitsdosiereinrichtung mindestens eine Schnittstelle zum Befüllen des Elektrolytflüssigkeitskomponentenvorratsbehälters mit mindestens einer Elektrolytflüssigkeitskomponente, beispielsweise Elektrolytflüssigkeit und/oder Elektrolytlösungsmittel und/oder Leitsalz, und/oder zum Entfernen von mindestens einer Elektrolytflüs- sigkeitskomponente, beispielsweise Elektrolytflüssigkeit und/oder Elektrolytlösungsmittel und/oder Leitsalz, aus dem Elektrolytflüssigkeitskomponentenvorratsbehälter auf. Auf diese Weise kann der Elektrolytflüssigkeitskomponentenvorratsbehälter mit neuer Elektrolytflüssigkeit und/oder neuem Elektrolytlösungsmittel und/oder neuem Leitsalz versehen werden. Zudem kann so die Elektrolytflüs- sigkeitsdosiereinrichtung auch dazu genutzt werden, beispielsweise im Zuge einer Wartung der Lithium-Zelle beziehungsweise des Batteriesystems, die Elektrolytflüssigkeit in der Lithium-Zelle vollständig auszutauschen beziehungsweise durch neue Elektrolytflüssigkeit zu ersetzen. So können vorteilhafterweise das Leistungsvermögen, die Lebensdauer und die Sicherheit der Lithium-Zelle und damit des Batteriesystems erhöht werden.

Im Rahmen einer weiteren Ausführungsform umfasst das Batteriesystem mindestens eine Messeinrichtung. Insbesondere kann es sich dabei um mindestens eine Messeinrichtung handeln, welche ausgewählt ist, aus der Gruppe umfassend (Zell-)Spannungsmesseinrichtungen, (Zell-)Strommesseinrichtungen, (Zellinnen-)Widerstandsmesseinrichtungen, (Zellinnen-)Temperaturmesseinrichtungen oder eine Kombination davon.

Die Messeinrichtung/en können in die Elektrolytflüssigkeitsdosiereinrichtung integriert sein beziehungsweise ein Bauteil der Elektrolytflüssigkeitsdosiereinrichtung sein. Es ist jedoch ebenso möglich, dass es sich bei der oder den Messeinrichtung/en um auch für weitere Zwecke eingesetzte Messeinrichtungen des Batteriesystems, beispielsweise eines Batteriemanagementsystem, handelt.

Im Rahmen einer weiteren Ausführungsform steuert die Steuereinrichtung die Elektrolytflüssigkeitsdosiereinrichtung an der Lithium-Zelle Elektrolytflüssigkeit zuführt, insofern der Zellinnenwiderstand, insbesondere bei der aktuellen Temperatur, höher als ein vorbestimmter, insbesondere oberer, Grenzwert ist.

Im Rahmen einer weiteren Ausführungsform steuert die Steuereinrichtung die Elektrolytflüssigkeitsdosiereinrichtung an Elektrolytflüssigkeit aus der Lithium- Zelle abzuführen, insofern der Zellinnenwiderstand, insbesondere bei der aktuel- len Temperatur, niedriger als ein vorbestimmter, insbesondere unterer, Grenzwert ist.

Im Rahmen einer weiteren Ausführungsform steuert die Steuereinrichtung die Elektrolytflüssigkeitsdosiereinrichtung nicht an der Lithium-Zelle Elektrolytflüssigkeit zuzuführen oder abzuführen, insofern der Zellinnenwiderstand, insbesondere bei der aktuellen Temperatur, dem vorbestimmten Grenzwert entspricht oder innerhalb eines Bereichs liegt, welcher sich vom unteren Grenzwert bis zum oberen Grenzwert erstreckt.

Insofern für den Zellinnenwiderstand ein einziger Grenzwert, beispielsweise x, gesetzt wird, kann zum Beispiel bei einem Zellinnenwiderstand größer als x Elektrolytflüssigkeit zugeführt werden beziehungsweise bei einem Zellinnenwiderstand kleiner als x Elektrolyt abgeführt werden beziehungsweise bei einem Zellinnenwiderstand gleich x keine Elektrolytflüssigkeitszufuhr und -abfuhr stattfinden.

Es ist jedoch ebenso möglich einen Toleranzbereich vorzusehen. Dies kann beispielsweise dadurch erfolgen, dass ein oberer Grenzwert, beispielsweise x_{O}, und ein unterer Grenzwert, beispielsweise x_{U}, gesetzt wird. Zum Beispiel kann dann bei einem Zellinnenwiderstand größer als x_{O} Elektrolytflüssigkeit zugeführt werden beziehungsweise bei einem Zellinnenwiderstand kleiner als x_{U} Elektrolyt abgeführt werden beziehungsweise bei einem Zellinnenwiderstand der größer oder gleich x_{U} und kleiner oder gleich x_{O} keine Elektrolytflüssigkeitszufuhr und -abfuhr stattfinden.

Im Rahmen einer weiteren Ausführungsform ist die zuzuführende beziehungsweise abzuführende Elektrolytflüssigkeitsmenge proportional zur Differenz zwischen dem Zellinnenwiderstand und einem beziehungsweise dem entsprechenden Grenzwert.

Im Rahmen einer weiteren Ausführungsform ist die Position beziehungsweise Dehnung der beweglichen Wand der Elektrolytflüssigkeitsdosiereinrichtung proportional zur Differenz zwischen dem Zellinnenwiderstand und einem beziehungsweise dem entsprechenden Grenzwert veränderbar.

Das Batteriesystem kann sowohl eine als auch zwei oder mehr Lithium-Zellen umfassen. Insofern das Batteriesystem mehrere Lithium-Zellen umfasst, kann das Batteriesystem sowohl eine Elektrolytflüssigkeitsdosiereinrichtung, welche beispielsweise zur Elektrolytflüssigkeitsversorgung von allen Lithium-Zellen ausgelegt ist, als auch mehrere Elektrolytflüssigkeitsdosiereinrichtungen umfassen, welche beispielsweise zur Elektrolytflüssigkeitsversorgung jeweils einer der Lithium-Zellen ausgelegt sind. Insofern das Batteriesystem eine Elektrolytflüssigkeitsdosiereinrichtung umfasst, welche zur Elektrolytflüssigkeitsversorgung von mehreren Lithium-Zellen ausgelegt ist, kann die Elektrolytflüssigkeitsdosierein- richtung, insbesondere für jede mit Elektrolytflüssigkeit zu versorgende Lithium-Zelle, ein, insbesondere automatisch, steuerbares Ventil umfassen. Insbesondere kann in diesem Fall in jeden in die Lithium-Zelle mündenden Flüssigkeitsleitungsabschnitt ein, insbesondere automatisch, steuerbares Ventil integriert sein. So kann vorteilhafterweise bewirkt werden, dass die Menge an Elektrolytflüssigkeit in einer oder mehreren bestimmten Lithium-Zellen reguliert werden kann, während in anderen Lithium-Zellen, welche beispielsweise bereits eine optimale Menge an Elektrolytflüssigkeit enthalten, die Menge an Elektrolytflüssigkeit beibehalten werden kann.

Hinsichtlich weiterer Merkmale und Vorteile des erfindungsgemäßen Batteriesystems wird hiermit explizit auf die Erläuterungen im Zusammenhang mit der später erläuterten, erfindungsgemäßen Elektrolytflüssigkeitsdosiereinrichtung, der später erläuterten, erfindungsgemäßen Lithium-Zelle, dem später erläuterten, erfindungsgemäßen Verfahren, dem später erläuterten, erfindungsgemäßen mobilen oder stationären System sowie auf die Figur und Figurbeschreibung verwiesen.

Ein weiterer Gegenstand der vorliegenden Erfindung ist eine Elektrolytflüssigkeitsdosiereinrichtung für ein erfindungsgemäßes Batteriesystem und/oder zur Durchführung eines später erläuterten, erfindungsgemäßen Verfahrens.

Die Elektrolytflüssigkeitsdosiereinrichtung umfasst einen Elektrolytflüssigkeitskomponentenvorratsbehälter. Der Elektrolytflüssigkeitskomponentenvorratsbehälter weist eine bewegliche Wand zur Veränderung des Volumens des Elektrolytflüssigkeitskomponentenvorratsbehälters auf. Bei der beweglichen Wand kann es sich beispielsweise ähnlich wie bei einer Spritze, um eine bewegliche, insbesondere verschiebbare Wand, aus einem relativ starren Material handeln. Es ist jedoch ebenso möglich, die beweg- liche Wand aus einem elastischen Material auszubilden und die Volumenänderung durch eine Änderung der Dehnung des elastischen Materials herbeizuführen.

Weiterhin umfasst die Elektrolytflüssigkeitsdosiereinrichtung eine Steuereinrichtung. Die Steuereinrichtung ist dazu ausgelegt, einen entsprechenden Hub der beweglichen Wand der Elektrolytflüssigkeitsdosiereinrichtung in Abhängigkeit von mindestens einem Messparameter, insbesondere ausgewählt aus der Gruppe umfassend Zellspannung, Zellstrom, Zellinnenwiderstand, und Kombinationen davon, zu steuern.

Um Messparameter von einer oder mehreren Messeinrichtungen zu empfangen, kann die Steuereinrichtung mindestens eine Schnittstelle zum signaltechnischen Anschließen einer Messeinrichtung aufweisen. Beispielsweise kann die Steuereinrichtung eine Schnittstelle zum signaltechnischen Anschließen einer (Zell-)Spannungsmesseinrichtung und/oder eine Schnittstelle zum signaltechnischen Anschließen einer (Zell-)Strommesseinrichtung und/oder eine Schnittstellezum signaltechnischen Anschließen eine (Zellinnen-)Widerstandsmesseinrichtung und/oder eine Schnittstelle zum signaltechnischen Anschließen einer (Zellinnen-)Temperaturmesseinrichtung aufwei-sen.

Die Steuereinrichtung kann die Elektrolytflüssigkeitsdosiereinrichtung insbesondere ansteuern der Lithium-Zelle Elektrolytflüssigkeit zuzuführen, insofern der Zellinnenwiderstand, insbesondere bei der aktuellen Temperatur, höher als ein vorbestimmter, insbesondere oberer, Grenzwert ist und/oder Elektrolytflüssigkeit aus der Lithium-Zelle abzuführen, insofern der Zellinnenwiderstand, insbesondere bei der aktuellen Temperatur, niedriger als ein vorbestimmter, insbesondere unterer, Grenzwert ist.
Insofern der Zellinnenwiderstand, insbesondere bei der aktuellen Temperatur, dem vorbestimmten Grenzwert entspricht oder innerhalb eines Bereichs liegt, welcher sich vom unteren Grenzwert bis zum oberen Grenzwert erstreckt, kann die Steuereinrichtung die Elektrolytflüssigkeitsdosiereinrichtung veranlassen, dass Elektrolytflüssigkeit der Lithium-Zelle weder zugeführt oder daraus abgeführt wird.

Die zuzuführende beziehungsweise abzuführende Elektrolytflüssigkeitsmenge kann proportional zur Differenz zwischen dem Zellinnenwiderstand und einem beziehungsweise dem entsprechenden Grenzwert sein.

Die Position beziehungsweise Dehnung der beweglichen Wand der Elektrolytflüssigkeitsdosiereinrichtung kann insbesondere proportional zur Differenz zwischen dem Zellinnenwiderstand und einem beziehungsweise dem entsprechenden Grenzwert veränderbar sein.

Weiterhin kann die Elektrolytflüssigkeitsdosiereinrichtung mindestens eine Messeinrichtung und/oder mindestens eine Schnittstelle zum signaltechnischen Anschließen mindestens einer Messeinrichtung umfassen. Insbesondere kann es sich dabei um mindestens eine Messeinrichtung handeln, welche ausgewählt ist, aus der Gruppe umfassend (Zell-)Spannungsmesseinrichtungen, (Zell-)Strommesseinrichtungen, (Zellinnen-)Widerstandsmesseinrichtungen, (Zellinnen-)Temperaturmesseinrichtungen oder eine Kombination davon.

Die Elektrolytflüssigkeitsdosiereinrichtung kann sowohl zur Elektrolytflüssigkeitsversorgung von einer als auch mehreren Lithium-Zellen ausgelegt sein. Insofern die Elektrolytflüssigkeitsdosiereinrichtung zur Elektrolytflüssigkeitsversorgung von mehreren Lithium-Zellen ausgelegt ist, kann die Elektrolytflüssigkeitsdosiereinrichtung, insbesondere für jede mit Elektrolytflüssigkeit zu versorgende Lithium-Zelle, ein, insbesondere automatisch, steuerbares Ventil umfassen. Insbesondere kann in diesem Fall in jeden in die Lithium-Zelle mündenden Flüssigkeitsleitungsabschnitt ein, insbesondere automatisch, steuerbares Ventil integ- riert sein. So kann vorteilhafterweise bewirkt werden, dass die Menge an Elektrolytflüssigkeit in einer oder mehreren bestimmten Lithium-Zellen reguliert werden kann, während in anderen Lithium-Zellen, welche beispielsweise bereits eine optimale Menge an Elektrolytflüssigkeit enthalten, die Menge an Elektrolytflüssigkeit beibehalten werden kann.

Im Rahmen einer Ausführungsform weist die Elektrolytflüssigkeitsdosiereinrichtung mindestens eine Schnittstelle zum Befüllen des Elektrolytflüssigkeitskomponentenvorratsbehälters mit mindestens einer Elektrolytflüssigkeitskomponente, insbesondere Elektrolytflüssigkeit, und/oder zum Entfernen von mindestens einer Elektrolytflüssigkeitskomponente, insbesondere Elektrolytflüssigkeit, aus dem Elektrolytflüssigkeitskomponentenvorratsbehälter auf.

So kann die Elektrolytflüs- sigkeitsdosiereinrichtung auch dazu genutzt werden, beispielsweise im Zuge einer Wartung der Lithium-Zelle beziehungsweise des Batteriesystems, die Elektrolytflüssigkeit in der Lithium-Zelle vollständig auszutauschen beziehungsweise durch neue Elektrolytflüssigkeit zu ersetzen. So können vorteilhafterweise das Leistungsvermögen, die Lebensdauer und die Sicherheit der Lithium-Zelle und damit des Batteriesystems erhöht werden.

Hinsichtlich weiterer Merkmale und Vorteile der erfindungsgemäßen Elektrolytflüssigkeitsdosiereinrichtung wird hiermit explizit auf die Erläuterungen im Zusammenhang mit dem erfindungsgemäßen Batteriesystem, dem später erläuterten, erfindungsgemäßen Verfahren, dem später erläuterten, erfindungsgemäßen mobilen oder stationären System sowie auf die Figur und Figurbeschreibung verwiesen.

Eine Lithium-Zelle, des erfindungsgemäßen Batteriesystem umfasst beispielsweise eine Anode, eine Kathode, einen dazwischen angeordneten Separator und einen Elektrolyten, wobei der Elektrolyt mindestens ein, mit einer Elektrolytflüssigkeit getränktes oder tränkbares Polymer umfasst. Dabei ist es möglich, dass der Separator den Elektrolyten umfasst oder daraus ausgebildet ist. Im Bereich des Separators, insbesondere an einer oder mehreren Stellen am Rand des Separators, können insbesondere eine oder mehrere Schnittstelle/n zur Zuführung und/oder Abführung mindestens einer Elektrolytflüssigkeitskomponente, insbesondere von Elektrolytflüssigkeit, insbesondere durch die Elektrolytflüssigkeitsdosiereinrichtung, ausgebildet sein.

Ein weiterer Gegenstand der vorliegenden Erfindung ist ein Verfahren zum Betrieb eines erfindungsgemäßen Batteriesystems, einer erfindungsgemäßen Elektrolytflüssigkeitsdosiereinrichtung, welches die folgenden Verfahrensschritte umfasst:
a) Ermitteln des Zellinnenwiderstandes einer Lithium-Zelle und gegebenenfalls der Temperatur der Lithium-Zelle,
b) Bestimmen, ob der ermittelte Zellinnenwiderstand, insbesondere bei der ermittelten Temperatur, oberhalb eines vorbestimmten, insbesondere oberen, Grenzwertes oder unterhalb eines vorbestimmten, insbesondere unteren, Grenzwertes liegt, und
c) Zuführen von Elektrolytflüssigkeit in die Lithium-Zelle, insofern der ermittelte Zellinnenwiderstand höher als der vorbestimmte, insbesondere obere, Grenzwert ist, oder Entfernen von Elektrolytflüssigkeit aus der Lithium-Zelle, insofern der ermittelte Zellinnenwiderstand niedriger als der vorbestimmte, insbesondere untere, Grenzwert ist.

Durch das erfindungsgemäße Verfahren kann vorteilhafterweise die Elektrolytflüssigkeitsmenge einer Lithium-Zelle mit gelartigem Elektrolyten variabel und selbstregulierend beziehungsweise automatisch reguliert eingestellt werden, wodurch die vorstehend erläuterten Vorteile erzielt werden können.

Beispielsweise kann aus der gemessenen Zellspannung und dem Strom beziehungsweise aus einem daraus errechenbaren Innenwiderstand der Zelle sowie der aktuellen Temperatur im Inneren der Zelle unmittelbar abgeleitet werden, ob die in der Zelle befindliche Menge an Elektrolytflüssigkeit ausreichend ist (gemessener Widerstand entspricht Sollwert), erhöht werden muss (gemessener Widerstand ist höher als Sollwert oder verringert werden muss (gemessener Widerstand ist niedriger als Sollwert).

Die Erhöhung der Elektrolytflüssigkeitsmenge kann dann durch Zudosierung über die Elektrolytflüssigkeitsdosiereinrichtung erfolgen. Die Reduzierung kann analog über eine Entfernung von Elektrolytflüssigkeit aus der Zelle durch die gleiche Elektrolytflüssigkeitsdosiereinrichtung erfolgen. Die Funktionsweise der Elektrolytflüssigkeitsdosiereinrichtung kann dabei einer Spritze ähneln.

Die Zu- beziehungsweise Abführung von Elektrolytflüssigkeit kann, beispielsweise punktuell, an einer oder mehreren Stellen am Rande des Separators erfolgen, da sich die. Elektrolytflüssigkeitsmenge von selbst im Separator beziehungsweise dem Festelektrolytpolymer ausbreitet. Die Berechnung der Zu- beziehungsweise Abführung der Elektrolytflüssigkeit und somit die Umwandlung der gemessenen Strom-, Spannungs- und Temperaturwerte in einen entsprechenden Hub der beweglichen Wand der Elektrolytflüssigkeitsdosiereinrichtung wird entweder durch eine geeignete elektronische Steuereinrichtung unmittelbar an beziehungsweise in der Elektrolytflüssigkeitsdosiereinrichtung oder aber von einer vorhandenen Steuereinrichtung, beispielsweise einem vorhandenen Batterie-Management-System, übernommen.

Hinsichtlich weiterer Merkmale und Vorteile des erfindungsgemäßen Verfahrens wird hiermit explizit auf die Erläuterungen im Zusammenhang mit dem erfin- dungsgemäßen Batteriesystem, der erfindungsgemäßen Elektrolytflüssigkeitsdosiereinrichtung, dem später erläuterten, erfindungsgemäßen mobilen oder stationären System sowie auf die Figur und Figurbeschreibung verwiesen.

Ein weiterer Gegenstand der vorliegenden Erfindung ist die Verwendung eines erfindungsgemäßen Batteriesystems, einer erfindungsgemäßen Elektrolytflüssigkeitsdosiereinrichtung oder eines erfindungsgemäßen Verfahrens in einem mobilen-oder stationären System.

Insbesondere kann es sich dabei um ein Fahrzeug, bei- spielsweise ein Hybrid-, Plug-in-Hybrid- oder Elektrofahrzeug, eine Energiespei- cheranlage, beispielsweise zur stationären Energiespeicherung, zum Beispiel in einem Haus oder einer technischen Anlagen, ein Elektrowerkzeug, ein Elektrogartengerät oder ein elektronisches Gerät, zum Beispiel ein Notebook, ein PDA oder ein Mobiltelefon handeln.

Aufgrund der besonders hohen Sicherheitsanforderungen in Automotive-Anwendungen sind das erfindungsgemäße Batteriesystem, die erfindungsgemäße Elektrolytflüssigkeitsdosiereinrichtung und/oder das erfindungsgemäße Verfahren in besonderem Maße für Hybrid-, Plug-in-Hybrid- und Elektrofahrzeuge geeignet.

Hinsichtlich weiterer Merkmale und Vorteile des erfindungsgemäßen mobilen oder stationären Systems wird hiermit explizit auf die Erläuterungen im Zusammenhang mit dem erfindungsgemäßen Batteriesystem, der erfindungsgemäßen Elektrolytflüssigkeitsdosiereinrichtung, erfindungsgemäßen Verfahren sowie auf die Figur und Figurbeschreibung verwiesen.

### Zeichnungen

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt

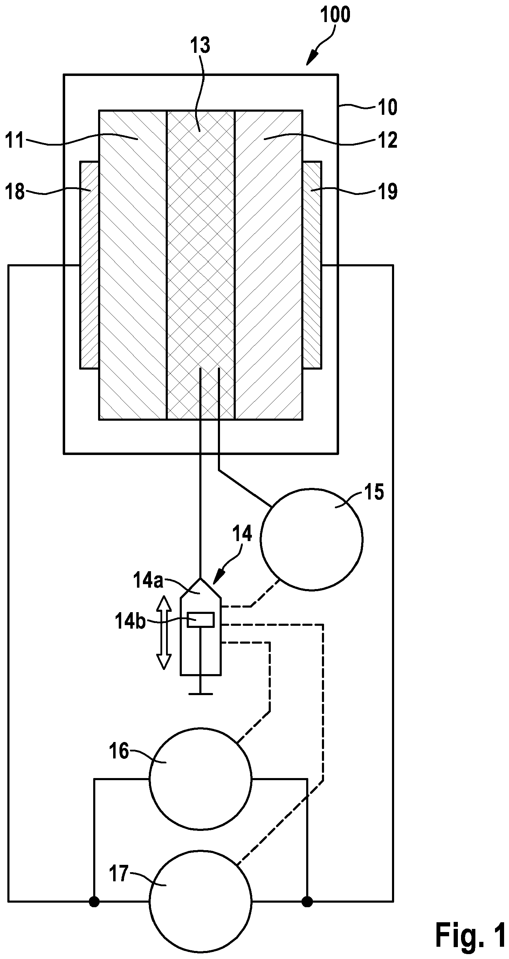

Fig. 1 eine schematische Darstellung einer Ausführungsform eines erfindunsgemäßen Batteriesystems und einer erfindungsgemäßen Elektrolytflüssigkeitsdosiereinrichtung.

Figur 1 zeigt ein Batteriesystem 10, welches eine Lithium-Zelle 100 umfasst, die eine Anode 11, eine Kathode 12, einen dazwischen angeordneten Separator 13 sowie einen nicht dargestellten gelartigen Elektrolyten aus einem, mit einer Elektrolytflüssigkeit getränkten Polymer umfasst. Zur elektrischen Kontaktierung der Anode 11 und Kathode 12 weist die Lithium-Zelle 100 zudem einen anodischen 18 und einen kathodischen 19 Stromkollektor auf.

Figur 1 veranschaulicht, dass das Batteriesystem weiterhin eine Elektrolytflüssigkeitsdosiereinrichtung 14 umfasst, die spritzenartig ausgeführt ist und einen Elektrolytflüssigkeitskomponentenvorratsbehälter 14a aufweist, dessen Volumen durch eine bewegliche Wand 14b veränderbar ist.

Figur 1 illustriert, dass eine von der Elektrolytflüssigkeitsdosiereinrichtung 14 ausgehende Flüssigkeitsleitung im Bereich des Separators 13 in die Lithium-Zelle 100 mündet, über welche durch die Elektrolytflüssigkeitsdosiereinrichtung 14 Elektrolytflüssigkeit der Lithium-Zelle 100 zugeführt beziehungsweise daraus abgeführt werden kann. Auf diese Weise ist es vorteilhafterweise möglich die Menge an Elektrolytflüssigkeit in der Lithium-Zelle 100 durch die Elektrolytflüssigkeitsdosiereinrichtung 14, insbesondere automatisch, zu regeln.

Figur 1 zeigt, dass das Batteriesystem weiterhin eine Zellinnentemperaturmesseinrichtung 15, eine Zellspannungsmesseinrichtung 16 und eine Zellstrommesseinrichtung 17 umfasst, welche jeweils signaltechnisch mit der Elektrolytflüssigkeitsdosiereinrichtung 14 verbunden sind. Die gestrichelten Linien veranschaulichen, dass die signaltechnischen Verbindungen dabei nicht zwangsläufig durch Kabel, sondern auch kabellos ausgebildet sein können. Insbesondere sind die Zellinnentemperaturmesseinrichtung 15, die Zellspannungsmesseinrichtung 16 und die Zellstrommesseinrichtung 17 mit einer nicht dargestellten, in die Elektrolytflüssigkeitsdosiereinrichtung 14 integrierten Steuereinrichtung verbunden.

Aus der von der Zellspannungsmesseinrichtung 16 gemessenen Zellspannung und dem von der Zellstrommesseinrichtung 17 gemessenen Strom kann die Steuereinrichtung den Zellinnenwiderstand ermitteln, welcher Rückschlüsse auf eine mögliche Elektrolytflüssigkeitszufuhr oder -entfernung bietet. Da der Zellinnenwiderstand temperaturabhängig ist, kann zusätzlich die durch die Zellinnentemperaturmesseinrichtung 15 gemessene Zellinnentemperatur einbezogen wer- den, um einen temperaturkorrigierten Zellinnenwiderstand zu bestimmen und an- hand von diesem eine Elektrolytflüssigkeitszu- oder abfuhr zu regeln.

In Abhängigkeit von dem Zellinnenwiderstand, gegebenenfalls unter Berücksichtigung der Zellinnentemperatur steuert dann die Steuereinrichtung die Position der beweglichen Wand 14b des Elektrolytflüssigkeitskomponentenvorratsbehälter 14a.

Die Steuerung kann dabei insbesondere derart erfolgen, dass insofern der Zellinnenwiderstand bei der aktuellen Temperatur höher als ein vorbestimmter Grenzwert ist, der Lithium-Zelle 100 Elektrolytflüssigkeit zugeführt wird und insofern der ermittelte Zellinnenwiderstand bei der aktuellen Temperatur niedriger als der vorbestimmte Grenzwert ist, Elektrolytflüssigkeit aus der Lithium-Zelle 100 entfernt wird.

Da die Zuführung und Abführung von Elektrolytflüssigkeit wiederum die später gemessenen Messparameter, wie Zellspannung, Strom und Zellinnentemperatur beeinflussen kann, kann diese Vorgehensweise gegebenenfalls auch als Regeln und die Steuereinrichtung als Regeleinrichtung bezeichnet werden.

Insgesamt kann so vorteilhafterweise die Menge an Elektrolytflüssigkeit innerhalb des Gel-Polymerelektrolyts, insbesondere in Abhängigkeit von Strom, Spannung und Temperatur, in beide Richtungen automatisch gesteuert beziehungsweise reguliert werden.

## Patentansprüche

1. Batteriesystem (10), umfassend
- mindestens eine Lithium-Zelle (100) mit einem Elektrolyten, welcher mindestens ein, mit einer Elektrolytflüssigkeit getränktes oder tränkbares Polymer umfasst, und
- mindestens eine Elektrolytflüssigkeitsdosiereinrichtung (14) nach einem der Ansprüche 8 oder 9,
wobei mindestens eine Komponente der Elektrolytflüssigkeit durch die Elektrolytflüssigkeitsdosiereinrichtung (14) der Lithium-Zelle (100) zuführbar und/oder aus der Lithium-Zelle (100) abführbar ist,
und wobei die Elektrolytflüssigkeits-dosiereinrichtung (14) mindestens einen Elektrolytflüssigkeitskomponenten-vorratsbehälter (14a) aufweist, dessen Volumen durch eine bewegliche Wand (14b) veränderbar ist,
**dadurch gekennzeichnet, dass** das Batteriesystem (10) eine Steuereinrichtung umfasst, welche einen entsprechenden Hub der beweglichen Wand (14b) der Elektrolytflüssigkeits-dosiereinrichtung (14) in Abhängigkeit von mindestens einem Messparameter, ausgewählt aus der Gruppe umfassend Zellspannung, Zellstrom, Zellinnenwiderstand und Kombinationen davon, steuert.

2. Batteriesystem (10) nach Anspruch 1, wobei die Menge der mindestens einen Elektrolytflüssigkeitskomponente, insbesondere der Elektrolytflüssigkeit, in der Lithium-Zelle (100) durch die Elektrolytflüssigkeitsdosiereinrichtung (14), insbesondere automatisch, regulierbar ist.

3. Batteriesystem (10) nach Anspruch 1 oder 2, wobei die Lithium-Zelle (100) eine Anode (11), eine Kathode (12) und einen dazwischen angeordneten Separator (13) aufweist, wobei im Bereich des Separators (13), eine oder mehrer Schnittstellen zur Zuführung und/oder Abführung der mindestens einenElektrolytflüssigkeitskomponente, insbesondere von Elektrolytflüssigkeit, ausgebildet sind.

4. Batteriesystem (10) nach einem der Ansprüche 1 bis 3, wobei die Elektrolytflüssigkeitsdosiereinrichtung (14) mindestens eine Schnittstelle zum Befüllen des Elektrolytflüssigkeitskomponentenvorratsbehälters (14a) mit mindestens einer Elektrolytflüssigkeitskomponente, insbesondere Elektrolytflüssigkeit, und/oder zum Entfernen von mindestens einer Elektrolytflüssigkeitskomponente, insbesondere Elektrolytflüssigkeit, aus dem Elektrolytflüssigkeitskomponentenvorratsbehälter (14a) aufweist.

5. Batteriesystem (10) nach einem der Ansprüche 1 bis 4, wobei das Batteriesystem mindestens eine Messeinrichtung (15,16,17), insbesondere ausgewählt aus der Gruppe umfassend eine Spannungsmesseinrichtung (16), eine Strommesseinrichtung (17), eine Widerstandsmesseinrichtung, eine Temperaturmesseinrichtung (15) oder eine Kombination davon, umfasst.

6. Batteriesystem (10) nach einem der Ansprüche 1 bis 5, wobei die Steuereinrichtung
- die Elektrolytflüssigkeitsdosiereinrichtung (14) ansteuert der Lithium-Zelle (100) Elektrolytflüssigkeit zuzuführen, insofern der Zellinnenwiderstand, insbesondere bei der aktuellen Temperatur, höher als ein vorbestimmter, insbesondere oberer, Grenzwert ist, und/oder
- die Elektrolytflüssigkeitsdosiereinrichtung (14) ansteuert Elektrolytflüssigkeit aus der Lithium-Zelle (100) abzuführen, insofern der Zellinnenwiderstand, insbesondere bei der aktuellen Temperatur, niedriger als ein vorbestimmter, insbesondere unterer, Grenzwert ist, und/oder
- die Elektrolytflüssigkeitsdosiereinrichtung (14) ansteuert der Lithium-Zelle (100) nicht Elektrolytflüssigkeit zuzuführen oder abzuführen, insofern der Zellinnenwiderstand, insbesondere bei der aktuellen Temperatur, dem vorbestimmten Grenzwert entspricht oder innerhalb eines Bereichs liegt, welcher sich vom unteren Grenzwert bis zum oberen Grenzwert erstreckt.

7. Batteriesystem (10) nach einem der Ansprüche 1 bis 6, wobei die zuzuführende beziehungsweise abzuführende Elektrolytflüssigkeitsmenge proportional zur Differenz zwischen dem Zellinnenwiderstand und einem beziehungsweise dem entsprechenden Grenzwert ist und/oder die Position der beweglichen Wand (14b) der Elektrolytflüssigkeitsdosiereinrichtung (14) proportional zur Differenz zwischen dem Zellinnenwiderstand und einem beziehungsweise dem entsprechenden Grenzwert veränderbar ist.

8. Elektrolytflüssigkeitsdosiereinrichtung für ein Batteriesystem (10) nach einem der Ansprüche 1-7, welches mindestens eine Lithium-Zelle umfasst, weiterhin umfassend mindestens einen Elektrolytflüssigkeitskomponentenvorratsbehälter (14a), welcher eine bewegliche Wand (14b) zur Veränderung des Volumens des Elektrolytflüssigkeitskomponentenvorratsbehälters (14a) aufweist, **dadurch gekennzeichnet, dass** die Elektrolytflüssigkeitsdosiereinrichtung (14) weiterhin eine Steuereinrichtung umfasst und wobei die Steuereinrichtung dazu ausgelegt ist, einen entsprechenden Hub der beweglichen Wand (14b) der Elektrolytflüssigkeitsdosiereinrichtung (14) in Abhängigkeit von mindestens einem Messparameter der zumindest einen Lithium-Zelle, ausgewählt aus der Gruppe umfassend Zellspannung, Zellstrom, Zellinnenwiderstand und Kombinationen davon, zu steuern,
und weiterhin insbesondere wobei die Elektrolytflüssigkeitsdosiereinrichtung (14) mindestens eine Messeinrichtung (15,16,17) und/oder mindestens eine Schnittstelle zum signaltechnischen Anschließen mindestens einer Messeinrichtung (15,16,17) umfasst.

9. Elektrolytflüssigkeitsdosiereinrichtung nach Anspruch 8, wobei die Elektrolytflüssigkeitsdosiereinrichtung (14) mindestens eine Schnittstelle zum Befüllen des Elektrolytflüssigkeitskomponentenvorratsbehälters (14a) mit mindestens einer Elektrolytflüssigkeitskomponente, insbesondere Elektrolytflüssigkeit, und/oder zum Entfernen von mindestens einer Elektrolytflüssigkeitskomponente, insbesondere Elektrolytflüssigkeit, aus dem Elektrolytflüssigkeitskomponentenvorratsbehälter (14a) aufweist.

10. Verfahren zum Betrieb eines Batteriesystems (10), nach einem der Ansprüche 1 bis 7, umfassend die Verfahrensschritte:
a) Ermitteln des Zellinnenwiderstandes einer Lithium-Zelle (100) und gegebenenfalls der Temperatur der Lithium-Zelle,
b) Bestimmen, ob der ermittelte Zellinnenwiderstand, insbesondere bei der ermittelten Temperatur, oberhalb eines vorbestimmten, insbesondere oberen, Grenzwertes oder unterhalb eines vorbestimmten, insbesondere unteren, Grenzwertes liegt, und
c) Zuführen von Elektrolytflüssigkeit in die Lithium-Zelle (100), insofern der ermittelte Zellinnenwiderstand höher als der vorbestimmte, insbesondere obere, Grenzwert ist, und Entfernen von Elektrolytflüssigkeit aus der Lithium-Zelle (100), insofern der ermittelte Zellinnenwiderstand niedriger als der vorbestimmte, insbesondere untere, Grenzwert ist.

11. Verwendung eines Batteriesystems nach einem der Ansprüche 1 bis 7 und/oder einer Elektrolytdosiereinrichtung (14) nach Anspruch 8 und/oder eines Verfahrens nach Anspruch 10 in einem mobilen oder stationären System, insbesondere Fahrzeug, Energiespeicheranlage, Elektrowerkzeug, Elektrogartengerät oder elektronisches Gerät.

## Claims

1. Battery system (10), comprising
- at least one lithium cell (100) with an electrolyte, which comprises at least one polymer that is impregnated or can be impregnated with an electrolyte fluid, and
- at least one electrolyte fluid metering device (14) according to either of Claims 8 and 9,
wherein at least one component of the electrolyte fluid can be supplied to the lithium cell (100) and/or can be discharged from the lithium cell (100) by the electrolyte fluid metering device (14),
and wherein the electrolyte fluid metering device (14) has at least one electrolyte fluid component reservoir (14a), the volume of which can be varied by a movable wall (14b),
**characterized in that** the battery system (10) comprises a control device, which controls a corresponding stroke of the movable wall (14b) of the electrolyte fluid metering device (14) in dependence on at least one measuring parameter, selected from the group comprising the cell voltage, cell current, internal cell resistance and combinations thereof.

2. Battery system (10) according to Claim 1, wherein the amount of the at least one electrolyte fluid component, in particular the electrolyte fluid, in the lithium cell (100) can be regulated, in particular automatically, by the electrolyte fluid metering device (14).

3. Battery system (10) according to Claim 1 or 2, wherein the lithium cell (100) has an anode (11), a cathode (12) and a separator (13) arranged in between, one or more interfaces for supplying and/or discharging the at least one electrolyte fluid component, in particular electrolyte fluid, being formed in the region of the separator (13).

4. Battery system (10) according to one of Claims 1 to 3, wherein the electrolyte fluid metering device (14) has at least one interface for filling the electrolyte fluid component reservoir (14a) with at least one electrolyte fluid component, in particular electrolyte fluid, and/or for removing at least one electrolyte fluid component, in particular electrolyte fluid, from the electrolyte fluid component reservoir (14a).

5. Battery system (10) according to one of Claims 1 to 4, wherein the battery system comprises at least one measuring device (15, 16, 17), in particular selected from the group comprising a voltage measuring device (16), a current measuring device (17), a resistance measuring device, a temperature measuring device (15) or a combination thereof.

6. Battery system (10) according to one of Claims 1 to 5, wherein the control device
- activates the electrolyte fluid metering device (14) to supply electrolyte fluid to the lithium cell (100) if the internal cell resistance, in particular at the temperature at the time, is higher than a predetermined, in particular upper, limit value, and/or
- activates the electrolyte fluid metering device (14) to discharge electrolyte fluid from the lithium cell (100) if the internal cell resistance, in particular at the temperature at the time, is lower than a predetermined, in particular lower, limit value, and/or
- does not activate the electrolyte fluid metering device (14) to supply or discharge electrolyte fluid to or from the lithium cell (100) if the internal cell resistance, in particular at the temperature at the time, corresponds to the predetermined limit value or lies within a range that extends from the lower limit value to the upper limit value.

7. Battery system (10) according to one of Claims 1 to 6, wherein the amount of electrolyte fluid to be supplied or to be discharged is proportional to the difference between the internal cell resistance and a or the corresponding limit value and/or the position of the movable wall (14b) of the electrolyte fluid metering device (14) is variable in proportion to the difference between the internal cell resistance and a or the corresponding limit value.

8. Electrolyte fluid metering device for a battery system (10) according to one of Claims 1-7, which comprises at least one lithium cell, furthermore comprising at least one electrolyte fluid component reservoir (14a), which has a movable wall (14b) for varying the volume of the electrolyte fluid component reservoir (14a), **characterized in that** the electrolyte fluid metering device (14) also comprises a control device and wherein the control device is designed to control a corresponding stroke of the movable wall (14b) of the electrolyte fluid metering device (14) in dependence on at least one measuring parameter of the at least one lithium cell, selected from the group comprising the cell voltage, cell current, internal cell resistance and combinations thereof, and furthermore in particular wherein the electrolyte fluid metering device (14) comprises at least one measuring device (15, 16, 17) and/or at least one interface for the signaling connection of at least one measuring device (15, 16, 17).

9. Electrolyte fluid metering device according to Claim 8, wherein the electrolyte fluid metering device (14) has at least one interface for filling the electrolyte fluid component reservoir (14a) with at least one electrolyte fluid component, in particular electrolyte fluid, and/or for removing at least one electrolyte fluid component, in particular electrolyte fluid, from the electrolyte fluid component reservoir (14a).

10. Method for operating a battery system (10), according to one of Claims 1 to 7, comprising the method steps of:
a) ascertaining the internal cell resistance of a lithium cell (100) and possibly the temperature of the lithium cell,
b) determining whether the internal cell resistance ascertained, in particular at the temperature ascertained, lies above a predetermined, in particular upper, limit value or below a predetermined, in particular lower, limit value, and
c) supplying electrolyte fluid to the lithium cell (100) if the internal cell resistance ascertained is higher than the predetermined, in particular upper, limit value, and removing electrolyte fluid from the lithium cell (100) if the internal cell resistance ascertained is lower than the predetermined, in particular lower, limit value.

11. Use of a battery system according to one of Claims 1 to 7 and/or of an electrolyte metering device (14) according to Claim 8 and/or of a method according to Claim 10 in a mobile or stationary system, in particular a vehicle, an energy storage system, a power tool, an electric garden tool or an electronic device.

## Revendications

1. Système de batterie (10), comprenant
- au moins une cellule au lithium (100) ayant un électrolyte qui comporte au moins un polymère imprégné ou pouvant être imprégné d'un liquide électrolytique, et
- au moins un dispositif de dosage de liquide électrolytique (14) selon l'une des revendications 8 ou 9,
au moins une composante du liquide électrolytique pouvant être acheminée à travers le dispositif de dosage de liquide électrolytique (14) de la cellule au lithium (100) et/ou pouvant être évacuée hors de la cellule au lithium (100),
et le dispositif de dosage de liquide électrolytique (14) possédant au moins un réservoir à composantes de liquide électrolytique (14a) dont le volume peut être modifié par une paroi mobile (14b),
**caractérisé en ce que** le système de batterie (10) comprend un dispositif de commande qui commande une course correspondante de la paroi mobile (14b) du dispositif de dosage de liquide électrolytique (14) en fonction d'au moins un paramètre de mesure, sélectionné dans le groupe comprenant la tension de cellule, le courant de cellule, la résistance interne de cellule et une combinaison de ceux-ci.

2. Système de batterie (10) selon la revendication 1, la quantité de l'au moins une composante du liquide électrolytique, notamment du liquide électrolytique, dans la cellule au lithium (100) pouvant être régulée par le dispositif de dosage de liquide électrolytique (14), notamment automatiquement.

3. Système de batterie (10) selon la revendication 1 ou 2, la cellule au lithium (100) possédant une anode (11), une cathode (12) et un séparateur (13) disposé entre celles-ci, une ou plusieurs interfaces destinées à l'acheminement et/ou à l'évacuation de l'au moins une composante du liquide électrolytique, notamment de liquide électrolytique, étant formées dans la zone du séparateur (13).

4. Système de batterie (10) selon l'une des revendications 1 à 3, le dispositif de dosage de liquide électrolytique (14) possédant au moins une interface destinée au remplissage du réservoir à composantes de liquide électrolytique (14a) avec au moins une composante de liquide électrolytique, notamment du liquide électrolytique, et/ou destinée à retirer au moins une composante de liquide électrolytique, notamment du liquide électrolytique, hors du réservoir à composantes de liquide électrolytique (14a).

5. Système de batterie (10) selon l'une des revendications 1 à 4, le système de batterie comprenant au moins un dispositif de mesure (15, 16, 17), notamment sélectionné dans le groupe comprenant un dispositif de mesure de tension (16), un dispositif de mesure de courant (17), un dispositif de mesure de résistance, un dispositif de mesure de température (15) ou une combinaison de ceux-ci.

6. Système de batterie (10) selon l'une des revendications 1 à 5, le dispositif de commande
- commandant le dispositif de dosage de liquide électrolytique (14) pour acheminer du liquide électrolytique à la cellule au lithium (100), sous réserve que la résistance interne de la cellule, notamment à la température actuelle, est supérieure à une valeur limite prédéfinie, notamment haute, et/ou
- commandant le dispositif de dosage de liquide électrolytique (14) pour évacuer du liquide électrolytique hors de la cellule au lithium (100), sous réserve que la résistance interne de la cellule, notamment à la température actuelle, est inférieure à une valeur limite prédéfinie, notamment basse, et/ou
- commandant le dispositif de dosage de liquide électrolytique (14) pour ne pas acheminer de liquide électrolytique à la cellule au lithium (100) ou en évacuer hors de celle-ci, sous réserve que la résistance interne de la cellule, notamment à la température actuelle, correspond à la valeur limite prédéfinie ou se trouve à l'intérieur d'une plage qui s'étend de la valeur limite basse à la valeur limite haute.

7. Système de batterie (10) selon l'une des revendications 1 à 6, la quantité de liquide électrolytique à acheminer ou à évacuer étant proportionnelle à la différence entre la résistance interne de cellule et une ou la valeur limite correspondante et/ou la position de la paroi mobile (14b) du dispositif de dosage de liquide électrolytique (14) étant modifiable proportionnellement à la différence entre la résistance interne de cellule et une ou la valeur limite correspondante.

8. Dispositif de dosage de liquide électrolytique pour un système de batterie (10) selon l'une des revendications 1 à 7, lequel comprend au moins une cellule au lithium, comprenant en outre au moins un réservoir à composantes de liquide électrolytique (14a) qui possède une paroi mobile (14b) destinée à modifier le volume du réservoir à composantes de liquide électrolytique (14a), **caractérisé en ce que** le dispositif de dosage de liquide électrolytique (14) comprend en outre un dispositif de commande et le dispositif de commande étant conçu pour commander une course correspondante de la paroi mobile (14b) du dispositif de dosage de liquide électrolytique (14) en fonction d'au moins un paramètre de mesure de l'au moins une cellule au lithium, sélectionné dans le groupe comprenant la tension de cellule, le courant de cellule, la résistance interne de cellule et une combinaison de ceux-ci
et en outre notamment le dispositif de dosage de liquide électrolytique (14) comprenant au moins un dispositif de mesure (15, 16, 17) et/ou au moins une interface destinée au raccordement de signalisation d'au moins un dispositif de mesure (15, 16, 17).

9. Dispositif de dosage de liquide électrolytique selon la revendication 8, le dispositif de dosage de liquide électrolytique (14) possédant au moins une interface destinée au remplissage du réservoir à composantes de liquide électrolytique (14a) avec au moins une composante de liquide électrolytique, notamment du liquide électrolytique, et/ou destinée à retirer au moins une composante de liquide électrolytique, notamment du liquide électrolytique, hors du réservoir à composantes de liquide électrolytique (14a).

10. Procédé pour faire fonctionner un système de batterie (10) selon l'une des revendications 1 à 7, comprenant les étapes suivantes :
a) détermination de la résistance interne de cellule d'une cellule au lithium (100) et, le cas échéant, de la température de la cellule au lithium,
b) détermination du fait de savoir si la résistance interne de cellule déterminée, notamment à la température déterminée, est supérieure à une valeur limite prédéfinie, notamment haute, ou inférieure à une valeur limite prédéfinie, notamment basse, et
c) acheminement de liquide électrolytique dans la cellule au lithium (100), sous réserve que la résistance interne déterminée de la cellule est supérieure à la valeur limite prédéfinie, notamment haute, et enlèvement de liquide électrolytique hors de la cellule au lithium (100), sous réserve que la résistance interne déterminée de la cellule est inférieure à une valeur limite prédéfinie, notamment basse.

11. Utilisation d'un système de batterie selon l'une des revendications 1 à 7 et/ou du dispositif de dosage de liquide électrolytique (14) selon la revendication 8 et/ou d'un procédé selon la revendication 10 dans un système mobile ou fixe, notamment un véhicule, un équipement d'accumulation d'énergie, un outil électrique, un outil de jardinage électrique ou un appareil électronique.
